# FASCICULE DE BREVET EUROPEEN

(11) **EP 1 026 782 B1**
(45) Date de publication et mention de la délivrance du brevet: **14.03.2007**
(21) Numéro de dépôt: 00400171.5
(22) Date de dépôt: 21.01.2000
(51) Int. Cl.: H01R 4/48, H02B 1/20, H02B 1/21

(54) **Bloc d'interconnexion pour appareils électriques**
Verbindungsblock für elektrische Geräte
Connection block for electrical devices

(30) Priorité: 05.02.1999 FR 9901534; 22.06.1999 FR 9908124
(43) Date de publication de la demande: 09.08.2000
(73) Titulaire: SCHNEIDER ELECTRIC INDUSTRIES SAS, 92500 Rueil-Malmaison (FR)
(72) Inventeur: Marcenne, Jacques, 21000 Dijon (FR); Paggi, Serge, 21490 Ruffey les Echirey (FR)

(56) Documents cités:
- EP-A- 0 434 964
- EP-A- 0 867 993
- CA-A- 1 109 132
- DE-A- 19 532 586

## Description

La présente invention concerne un ensemble de connexion comprenant une prise associable à deux appareils électriques juxtaposés pour assurer leur interconnexion.

Les bornes de puissance des appareillages basse tension utilisent parfois des ressort en forme de boucle dotée d'une fenêtre de coincement pour un conducteur à connecter. Quand l'opérateur veut alors connecter un conducteur tel qu'un câble dans un passage propre à une borne de l'un des appareils, il doit introduire préalablement un outil de desserrage dans un autre passage spécifique, voisin du précédent. L'interconnexion d'un couple de bornes nécessite donc plusieurs manoeuvres. Or il est souhaitable de pouvoir interconnecter rapidement et facilement des appareils électriques interrupteurs ou de distribution bénéficiant de bornes élastiques à ressort lorsque ces appareils sont juxtaposés ou assemblés.

L'invention a pour but de faciliter une telle interconnexion d'appareils électriques dotés de bornes élastiques par un dispositif simple et peu coûteux autorisant aussi bien une connexion classique de câbles dans les fenêtres des ressorts qu'une connexion rapide au moyen de broches.

Selon l'invention, - l'ensemble comprend une prise à corps isolant et à broches appairées électriquement entre elles de manière à s'engager parallèlement dans des bornes à interconnecter des deux appareils,
- en position connectée, les broches de la prise sont engagées dans les passages d'introduction d'outil et ont leurs extrémités libres disposées sur les régions convexes des ressorts des deux appareils, et
- la prise est dotée de moyens de blocage assurant son maintien sur l'un au moins des appareils en position connectée.

L'ensemble de connexion ainsi réalisé est simple, assure une interconnexion rapide des appareils et assure le capotage des bornes, tout en permettant, en l'absence de la pièce, la connexion classique de câbles dans les ressorts.

Les moyens de blocage sont de préférence constitués par des parties concaves des broches situées près des extrémités de celles-ci et destinées à s'appliquer sur les régions convexes des ressorts.

Les broches de la prise peuvent être parallèles et faire partie d'une pièce conductrice unique, par exemple encliquetée dans le corps de la prise, et dotée d'une âme qui raccorde les broches ; la pièce conductrice peut être conçue de manière que les extrémités des broches puissent se déplacer élastiquement avec une faible course pour s'adapter à des variations de cotes de réalisation ou d'assemblage.

D'autres caractéristiques de l'invention sont décrites dans les sous-revendications.

La description va être faite ci-après d'un mode de réalisation non limitatif de l'invention, en regard des dessins annexés.
La figure 1 représente en vue de côté un ensemble d'appareils électriques interconnectés par la prise selon l'invention.
La figure 2 montre en élévation de face plusieurs ensembles juxtaposés.
La figure 3 est une vue agrandie en coupe d'une prise assurant l'interconnexion entre le jeu de barres et le disjoncteur de l'ensemble de la figure 1.
La figure 4 représente en coupe la prise seule.
La figure 5 montre la prise en perspective avant.
La figure 6 montre en perspective arrière une prise dotée d'une barrette de distribution pour contacteurs inverseurs.

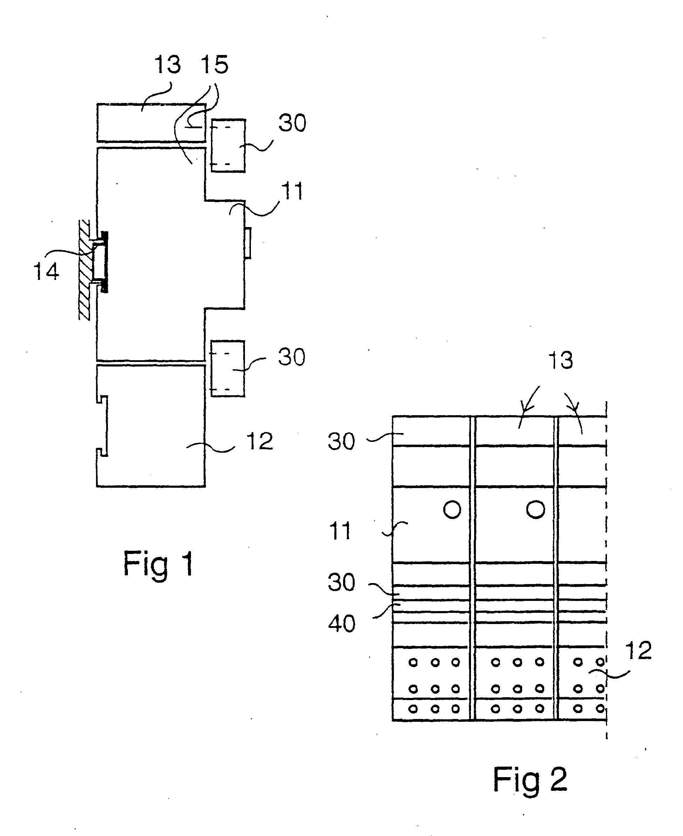

Les appareils illustrés sur la figure 1 forment un ensemble de départ-moteur 10 qui comprend un disjoncteur 11, un contacteur 12 mécaniquement accouplable au disjoncteur, ainsi qu'un jeu de barres 13 pour alimenter les bornes. L'ensemble est fixé à un support arrière 14 tel qu'un rail ou autre support par l'intermédiaire de moyens usuels de fixation, notamment d'encliquetage, prévus à l'arrière du disjoncteur, tandis que le contacteur 12 est fixé directement au disjoncteur 11. Des prises multipolaires 30 assurent l'interconnexion respectivement entre les appareils 11,12, et entre les appareils 11, 13, dont on peut observer qu'ils sont superposés et qu'ils ont la même largeur.

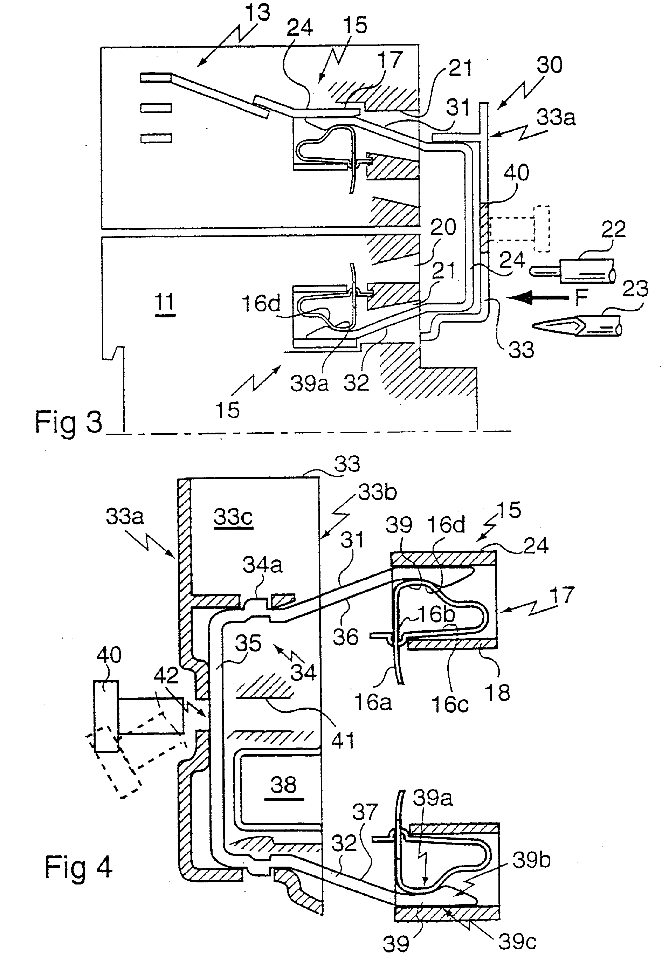

Les appareils 11, 12, 13 ont des bornes de puissance 15 à serrage élastique, ci-après désignées "bornes élastiques", situées prés des faces avant respectives 11a, 12a, 13a des appareils. Les bornes 15 sont logées dans les enveloppes respectives des appareils, plus précisément dans leurs boîtiers ou dans des borniers respectifs amont et aval rapportés et fixés à leurs boîtiers. Chaque borne 15 comprend un ressort 16 de type connu (voir figures 3 et 4) située dans un logement 17. Le ressort 16 présente une branche 16a de coincement munie d'une fenêtre 16b pour serrer par coincement un câble, une branche 16c appliquée sur un support conducteur 18 et une boucle à région dorsale convexe 16d reliant les branches 16a, 16c. A chaque borne 15 sont associées au moins deux passages 20, 21 prévus à l'avant du boîtier de l'appareil concerné. Le passage 20 sert à engager un câble 22 (voir figure 3) dans l'ouverture 16b, après desserrage du ressort 16 obtenu par une pression exercée sur la boucle 16d au moyen d'un outil 23 engagé dans le passage 21. La direction d'introduction F est indiquée par une flèche sur la figure 3.

L'ensemble 10 comprend des prises d'interconnexion de puissance 30 de préférence multipolaires, servant à connecter deux par deux des bornes de puissance 15 d'appareils voisins. La prise 30 comprend plusieurs groupes de broches parallèles 31,32 appairées électriquement. Le profil des broches permet de les introduire par glissement dans les passages 21 des bornes, avec mise en pression des ressorts 16 par application sur leur région convexe 16d et prise de contact avec une pièce conductrice 24 ; la pièce 24 est disposée parallèlement au support 18 et est par exemple solidaire de ce support. Chaque borne 15 est ainsi agencée pour permettre d'une part la connexion d'un câble 22 au travers du passage 20 à l'aide d'un outil passant à travers le passage 21, d'autre part la connexion directe et sans outil d'une broche 31 ou 32 par introduction dans le passage 21.

La figure 2 montre la juxtaposition de plusieurs ensembles de départ moteur 10.

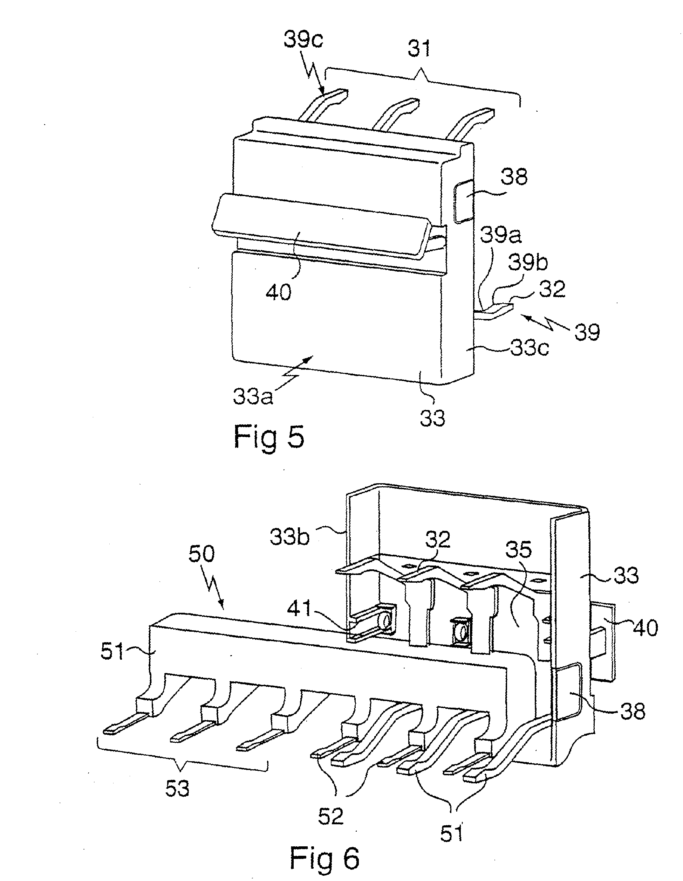

La prise d'interconnexion 30 comprend un corps isolant 33 ; celui-ci forme pour les deux appareils un capot cache-bornes qui s'étend sensiblement sur la largeur des appareils. Les broches amont et aval appairées 31,32 d'un même couple font partie d'une pièce conductrice unique 34. La pièce conductrice 34 présente une âme 35 qui relie électriquement les broches, celle-ci offrant des parties inclinées divergentes 36,37 qui donnent aux parties des broches extérieures au corps 33 une forme divergente en V. Le corps isolant 33 présente une paroi avant 33a, une paroi arrière 33b et des parois latérales 33c dotées d'aires sécables 38 permettant d'installer une barrette d'extension qui sera décrite à propos de la figure 6. Les extrémités libres des broches 31,32 sont parallèles et de même longueur. Bien entendu, si les faces avant des appareils à interconnecter ne sont pas coplanaires, les broches ont des longueurs différentes.

Comme on le voit figure 4, chaque broche 31,32 présente vers son extrémité libre 39 un moyen de blocage constitué par une partie concave, pente ou autre forme analogue 39a coopérant avec la région convexe 16d du ressort 16 pour assurer un blocage de la prise contre les appareils. Ce moyen de blocage est déterminé de façon à éviter de recourir à d'autres moyens, par exemple d'encliquetage, qui peuvent dans certains cas être prévus sur le corps 33 et sur les boîtiers ou borniers des appareils. L'extrémité libre 39 de la broche 31,32 présente du côté du ressort 16 une pente 39b facilitant l'introduction dans la borne 15 et du côté opposé au ressort 16 une face rectiligne 39c qui coopère par glissement avec la pièce conductrice fixe 24 et qui est appliquée par le ressort contre cette pièce. Le profil du passage 21 est en entonnoir pour guider la face rectiligne 39c et la partie divergente 36,37. Les pièces conductrices 34 propres à la prise 30 offrent enfin des éléments 34a de forme appropriée qui permettent de les monter par encliquetage dans le corps 33.

La prise 30 présente sur sa paroi avant 33a une tirette 40 coopérant avec des glissières 41 ménagées à l'intérieur du corps 33 pour permettre de passer d'une position effacée (en traits pleins sur la figure 3) à une position sortie ( en tirets sur la figure 3 et en traits pleins sur la figure 4) autorisant le retrait de la prise à partir des appareils. Ceci est avantageux quand les groupes d'appareils 10 sont juxtaposés comme on le voit figure 2. En position sortie, la tirette 40 est montée de manière à pouvoir basculer (position en tirets sur la figure 4) pour dégager l'accès à un passage de test, par exemple un passage 42 ménagé dans la face avant 33a du corps 33.

Les broches 31,32 ont une légère élasticité de manière à permettre à leurs extrémités libres de se déplacer transversalement à la direction d'introduction, c'est-à-dire parallèlement aux faces avant des appareils, en convergeant ou divergeant afin de s'adapter à des tolérancements de réalisation ou de montage entre les bornes 15 à interconnecter. Dans une variante de réalisation, il peut être prévu que l'un des groupes de broches, par exemple 31, est monté mobile dans le corps 33 par rapport à l'autre groupe de broches 32, en étant sollicité par un ressort.

Pour monter la prise, l'opérateur saisit les parois latérales 33c du corps 33 et engage selon la direction F les extrémités 39 des broches dans les passages 21. Les pentes 39b prennent contact avec les régions convexes 16d des ressorts, et les faces 39c sont plaquées contre les pièces conductrices 24 des bornes. L'élasticité transversale des broches permet de s'adapter aux variations de cotes. Pour extraire la prise, l'opérateur peut saisir la prise par ses parois latérales 33c, ou sortir la tirette 40, et il tire le corps 33 en surmontant la pression transversale exercée par les ressorts sur les broches.

Dans le mode de réalisation de la figure 6, la prise 30 est adaptée à l'alimentation de contacteurs inverseurs 12 juxtaposés. Le corps 33 de la prise loge d'une part les pièces 34 avec leurs broches 31,32, d'autre part une barrette d'extension 50 qui s'y trouve par exemple emboîtée ou encliquetée. La barrette 50 comporte un corps isolant 51 et des premières broches 52 situées au voisinage immédiat des broches 32, ainsi que des deuxièmes broches 53 connectées par couples, intérieurement au corps 51, aux broches 52. Les broches 52 et 53 sont destinées à coopérer avec les bornes 15 d'un premier contacteur et respectivement d'un deuxième contacteur, chaque broche 32 et la broche voisine 52 est connectée dans une double borne élastique 15 assurant leur interconnexion. La disposition décrite permet d'utiliser pour des contacteurs montés en inverseur la même prise 30 que celle d'un contacteur simple, avec simple adjonction de la barrette d'extension 50. Il serait bien sûr possible de concevoir une prise 30 combinant les broches 32,52 en des broches simples associées à des bornes élastiques simples.

## Revendications

1. Ensemble de connexion comprenant deux appareils électriques juxtaposés dotés de bornes (15) de connexion à ressort (16) en forme de boucle dotée d'une fenêtre (16b) de coincement d'un conducteur (22) à connecter et d'une région convexe (16d) apte à être pressée par un outil de desserrage, un passage (21) d'introduction de cet outil étant prévu pour chaque borne,
***caractérisé par le fait que :***
- l'ensemble comprend une prise (30) à corps isolant (33) et à broches (31, 32) appairées électriquement entre elles de manière à s'engager parallèlement dans des bornes (15) à interconnecter des deux appareils,
- en position connectée, les broches (31,32) de la prise sont engagées dans les passages (21) d'introduction d'outil et ont leurs extrémités libres disposées sur les régions convexes (16d) des ressorts des deux appareils,
- la prise (30) est dotée de moyens de blocage assurant son maintien sur l'un au moins des appareils en position connectée.

2. Ensemble d'interconnexion selon la revendication 1, **caractérisé par le fait que** les moyens de blocage de la prise sont constitués par des parties concaves (39) des broches (52,53) situées près des extrémités de celles-ci et destinées à s'appliquer sur les régions convexes (16d) des ressorts (16).

3. Ensemble d'interconnexion selon la revendication 1, **caractérisé par le fait que** le corps (33) de la prise (30) présente une tirette d'extraction (40).

4. Ensemble d'interconnexion selon la revendication 3, **caractérisé par le fait que** la tirette d'extraction (40) est déplaçable pour dégager l'accès à un passage de test (42) prévu à l'avant du corps (33) de la prise (30).

5. Ensemble d'interconnexion selon la revendication 1, **caractérisé par le fait que** le corps (33) de la prise (30) forme pour les bornes (15) des deux appareils un capot cache-bornes commun qui s'étend sensiblement sur la largeur des appareils.

6. Ensemble d'interconnexion selon la revendication 1, **caractérisé par le fait qu**'il comporte pour chaque couple de bornes (15) à connecter une pièce d'interconnexion unique (34) comprenant les broches parallèles (31,32), et une âme raccordant les broches (31,32) via des parties inclinées divergentes (36,37).

7. Ensemble d'interconnexion selon la revendication 1, **caractérisé par le fait qu**'il comporte pour chaque couple de bornes (15) à connecter une pièce d'interconnexion unique (34) comprenant les broches parallèles (31,32), et une âme (35) raccordant les broches (31,32), la pièce d'interconnexion étant fixée par encliquetage dans le corps isolant (33).

8. Ensemble d'interconnexion selon la revendication 1, **caractérisé par le fait que** les extrémités libres (36,37) des broches (31,32) sont aptes à se déplacer élastiquement pour converger ou diverger.

## Claims

1. Connection assembly comprising two adjacent electrical switchgear units equipped with connection terminals (15) with springs (16) in the form of a loop provided with a window (16b) for trapping a conductor (22) to be connected, and a convex region (16d) that can be pressed by a release tool, a passage (21) for insertion of this tool being provided for each terminal.
***characterized by** the fact that:*
the assembly comprises a plug (30) with an insulating body (33) and pins (31, 32) electrically matched with each other so that they engage parallel to each other in terminals (15) to be interconnected in the two switchgear units,
- in the connected position, the connector pins (31, 32) are engaged in passages (21) in which the tool is inserted and their free ends are located on convex regions (16d) of the springs on the two switchgear units,
- the plug (30) is provided with locking means for holding it on at least one of the two switchgear units in the connected position.

2. Interconnection assembly according to claim 1, **characterized by** the fact that the plug locking means are composed of concave parts (39) of pins (52, 53) located close to the ends of the parts and that will come into contact with the convex regions (16d) of the springs (16).

3. Interconnection assembly according to claim 1, **characterized by** the fact that the body (33) of the plug (30) is fitted with an extraction puller (40).

4. Interconnection assembly according to claim 3, **characterized by** the fact that the extraction puller (40) can be moved aside to release access to a test passage (42) provided in the front of the body (33) of the plug (30).

5. Interconnection assembly according to claim 1, **characterized by** the fact that the body (33) of the plug (30) forms a common terminal enclosure cap for the terminals (15) of the two switchgear units, extending over almost the entire width of the switchgear unit.

6. Interconnection assembly according to claim 1, **characterized by** the fact that for each pair of terminals (15) to be interconnected, it comprises a single interconnection part (34) comprising parallel pins (31, 32), and a core connecting the pins (31, 32) through inclined divergent parts (36, 37).

7. Interconnection assembly according to claim 1, **characterized by** the fact that for each pair of terminals (15) to be connected, it comprises a single interconnection part (34) comprising parallel pins (31, 32), and a core (35) connecting the pins (31, 32), the interconnection part being fixed by click fitting in the insulating body (33).

8. Interconnection assembly according to claim 1, **characterized by** the fact that the free ends (36, 37) of the pins (31, 32) can move elastically towards or away from each other.

## Patentansprüche

1. Anschlusseinrichtung, die zwei nebeneinander angeordnete elektrische Geräte aufweist, die mit Anschlussklemmen (15) mit Federn (16) in Form einer Schleife versehen sind, die mit einem Klemmfenster (16b) für einen anzuschließenden Leiter (22) und mit einem konvexen Bereich (16d) versehen ist, auf den ein Lösewerkzeug drücken kann, wobei ein Durchgang (21) zum Einführen dieses Werkzeugs für jede Klemme vorgesehen ist,
**dadurch gekennzeichnet, dass**:
- die Einheit einen Stecker (30) mit Isolierkörper (33) und mit Kontaktstiften (31, 32) aufweist, die elektrisch miteinander gepaart sind, so dass sie sich parallel in zusammenzuschaltende Klemmen (15) der beiden Geräte einführen,
- in der angeschlossenen Stellung die Kontaktstifte (31, 32) des Steckers in die Werkzeugeinführdurchgänge (21) eingeführt sind, und ihre freien Enden auf den konvexen Bereichen (16d) der Federn der beiden Geräte angeordnet sind,
- der Stecker (30) mit Blockiermitteln versehen ist, die seinen Halt auf mindestens einem der Geräte in der angeschlossenen Stellung gewährleisten.

2. Zusammenschalteinrichtung nach Anspruch 1, **dadurch gekennzeichnet, dass** die Blockiermittel des Steckers aus konkaven Teilen (39) der Kontaktstifte (52, 53) bestehen, die sich an deren Enden befinden und dazu bestimmt sind, sich auf die konvexen Bereiche (16d) der Federn (16) aufzulegen.

3. Zusammenschalteinrichtung nach Anspruch 1, **dadurch gekennzeichnet, dass** der Körper (33) des Steckers (30) einen Auszieh-Handzug (40) aufweist.

4. Zusammenschalteinrichtung nach Anspruch 3, **dadurch gekennzeichnet, dass** der Auszieh-Handzug (40) verschiebbar ist, um den Zugang zu einem Testdurchgang (42) freizugeben, der an der Vorderseite des Körpers (33) des Steckers (30) vorgesehen ist.

5. Zusammenschalteinrichtung nach Anspruch 1, **dadurch gekennzeichnet, dass** der Körper (33) des Steckers (30) für die Klemmen (15) der beiden Geräte eine gemeinsame Klemmenabdeckhaube bildet, die sich im Wesentlichen über die Breite der Geräte erstreckt.

6. Zusammenschalteinrichtung nach Anspruch 1, **dadurch gekennzeichnet, dass** sie für jedes Paar von zu verbindenden Klemmen (15) ein einziges Zusammenschaltungsbauteil (34) aufweist, das die parallelen Kontaktstifte (31, 32) und einen Steg enthält, der die Kontaktstifte (31, 32) über divergierende geneigte Teile (36, 37) verbindet.

7. Zusammenschalteinrichtung nach Anspruch 1, **dadurch gekennzeichnet, dass** sie für jedes Paar von anzuschließenden Klemmen (15) ein einziges Zusammenschaltungsbauteil (34) aufweist, das die parallelen Kontaktstifte (31, 32) und einen Steg (35) enthält, der die Kontaktstifte (31, 32) verbindet, wobei das Zusammenschaltungsbauteil durch Einrasten im Isolierkörper (33) befestigt wird.

8. Zusammenschalteinrichtung nach Anspruch 1, **dadurch gekennzeichnet, dass** die freien Enden (36, 37) der Kontaktstifte (31, 32) sich elastisch verschieben können, um zu konvergieren oder zu divergieren.
